(19) Europäisches Patentamt
European Patent Office
Office européen des brevets

(11) Veröffentlichungsnummer: **0 103 696**
**B1**

# (12) EUROPÄISCHE PATENTSCHRIFT

(45) Veröffentlichungstag der Patentschrift: **12.04.89**

(51) Int. Cl.⁴: **B 01 F 17/42**, B 01 F 17/10

(21) Anmeldenummer: **83107004.0**

(22) Anmeldetag: **16.07.83**

(54) **Wässrige Tensidkonzentrate und Verfahren zur Verbesserung des Fliessverhaltens schwerbeweglicher wässriger Tensidkonzentrate.**

(30) Priorität: **24.07.82 DE 3227782**

(43) Veröffentlichungstag der Anmeldung: **28.03.84 Patentblatt 84/13**

(45) Bekanntmachung des Hinweises auf die Patenterteilung: **12.04.89 Patentblatt 89/15**

(84) Benannte Vertragsstaaten: **AT BE CH DE FR GB IT LI LU NL SE**

(56) Entgegenhaltungen:
**US-A- 3 329 640**
**US-A- 3 975 294**
**US-A- 4 250 050**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Bartnick, Bernhard, Wiener-Neustädter-Strasse 26, D-4019 Monheim (DE)**
Erfinder: **Erwied, Werner, Dr., Senliser Strasse 22, D-4018 Langenfeld (DE)**
Erfinder: **Höfer, Rainer, Dr., Klever Strasse 31, D-4000 Düsseldorf (DE)**

**EP 0 103 696 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Alkylpolyglykolethersulfosuccinate und Alkylarylpolyglykolethersulfosuccinate sind Aniontenside, die bei der technischen Herstellung von Polymerdispersionen als Emulgatoren eine bedeutende Rolle spielen. Konzentrierte wäßrige Lösungen dieser Aniontenside zeigen eine Besonderheit im rheologischen Verhalten, die für die Praxis schwerwiegende Schwierigkeiten mit sich bringt. Höher konzentrierte wäßrige Tensidlösungen, beispielsweise solche mit einem Aktivsubstanzgehalt von 50 Gew.-% oder mehr, weisen die Konsistenz eines dicken Gels oder einer schwerbeweglichen Paste auf und sind nicht pumpbar. Versucht man solche Gele mit Wasser zu verdünnen, so nimmt die Viskosität nicht erwartungsgemäß ab, sondern steigt vielmehr zunächst auf unerwartet hohe Werte an.

Aufgrund dieser rheologischen Besonderheit werden Emulgatoren der genannten Art im Handel meist in Form verdünnter wäßriger Lösungen angeboten. Hochkonzentrierte Lösungen können nur unter Zugabe von bis zu 20 Gew.-% niederer Alkohole wie Ethanol oder Isopropanol hergestellt werden. Die Anwesenheit organischer Lösungsmittel, beispielsweise der genannten Alkohole, ist jedoch in Polymerdispersionen aus anwendungstechnischen Gründen nicht immer erwünscht, außerdem sind sie wegen ihrer leichten Entflammbarkeit sowohl bei der Herstellung der Emulgatoren als auch während des Transports, der Lagerung und der Verwendung mit einem erheblichen Sicherheitsrisiko verbunden. Darüber hinaus können bereits leichte Verschiebungen im Verhältnis Wasser/Alkohol in solchen Konzentraten zu unerwünschten Sedimentationserscheinungen führen.

Die Erscheinung, daß bei der Verdünnung nicht alkoholhaltiger wäßriger Tensidkonzentrate häufig der Zustand eines nicht mehr pumpbaren dicken Gels durchlaufen wird, führt in der betrieblichen Praxis zu erheblichen Problemen. So sind einmal gebildete Gelklumpen nur unter beträchtlichen Schwierigkeiten wieder in Lösung zu bringen. Die Ventile zu Zulaufgefäßen können damit verstopft werden und Konzentrationsschwankungen bei der Dosierung sind nicht auszuschließen. Schließlich ist die Verdünnung solcher wäßriger Tensidkonzentrate aus den genannten Gründen ein sehr zeitraubender Arbeitsgang.

Der Erfindung liegt die Aufgabe zugrunde, wäßrige Konzentrate von Alkylpolyglykolethersulfosuccinaten zur Verfügung zu stellen, die auch in hohen Konzentrationen pumpbar sind und beim Verdünnen mit Wasser kein unerwünschtes Ansteigen der Viskosität, gegebenenfalls bis zum Erreichen des Gelzustandes, zeigen. Insbesondere will die Erfindung Tensidlösungen der geschilderten Art schaffen, die keine organischen Lösungsmittel enthalten, aber dennoch in hohen Konzentrationen pumpbar sind und beim Verdünnen mit Wasser kein unerwünschtes Ansteigen der Viskosität oder Eindicken des Gelzustandes zeigen.

Die technische Lösung dieser Aufgabe geht von der Beobachtung aus, daß niedere Polyalkylenetherglykole und/oder wasserlösliche Salze von Mono- und/oder Disulfosuccinaten niederer Polyalkylenetherglykole wirkungsvolle Viskositätsregler für wäßrige Tensidkonzentrate der hier betroffenen Art sind. Es wurde dabei insbesondere die Feststellung gemacht, daß die Wirkung dieser Viskositätsregler mit dem Ansteigen des Molekulargewichts der verwendeten Polyalkylenetherglykole bzw. der Polyalkylenetherglykole, die den eingesetzten Sulfosuccinaten zugrunde liegen, zunimmt.

Gegenstand der Erfindung sind dementsprechend wäßrige Tensidkonzentrate, enthaltend wenigstens etwa 20 Gew.-% an wasserlöslichen Salzen von Alkylpolyglykolethersulfosuccinaten der Formel I,

$$R^1\text{–O–[A–O]}_n\text{–CO–CH}_2\text{–}\underset{\displaystyle SO_3M}{\underset{|}{CH}}\text{–CO–Z} \qquad (I)$$

in der $R^1$ den Kohlenwasserstoffrest eines geradkettigen oder verzweigten, gesättigten oder ungesättigten nicht-aromatischen Alkohols mit 4 bis 24, vorzugsweise 10 bis 18, Kohlenstoffatomen, A einen Ethylen- oder 1,2-Propylenrest, n eine Zahl von 1 bis 100, M ein Kation eines wasserlöslichen Salzes, insbesondere ein Alkalimetall-, Erdalkalimetall-, Ammoniumkation oder ein aus einem organischen Amin gebildetes Kation, vorzugsweise ein Natriumkation, bedeuten und Z im Falle der Sulfobernsteinsäurehalbester für –OM steht, wobei M die oben angegebene Bedeutung hat, oder im Falle der Sulfobernsteinsäurediester für $-[O-A]_n-O-R^1$, wobei A, $R^1$ und n die obenangegebene Bedeutung haben, und in der ferner die Stellung der $SO_3M$-Gruppe innerhalb des Bernsteinsäureesters vertauscht sein kann, und/oder Alkylarylpolyglykolethersulfosuccinate der Formel II,

$$R^2_m\text{Ar–O–[A–O]}_n\text{–CO–CH}_2\underset{\displaystyle SO_3M}{\underset{|}{CH}}\text{–CO–Z} \qquad (II)$$

in der $R^2$ einen geradkettigen oder verzweigten, gesättigten oder ungesättigten aliphatischen Kohlenwasserstoffrest mit 4 bis 16, insbesondere 6 bis 14, vorzugsweise 8 bis 12, Kohlenstoffatomen, m ganze Zahlen von 1 bis 3, vorzugsweise 1, Ar einen Phenylen- oder Naphthylenrest darstellen, die Symbole A, M und n dieselbe Bedeutung haben wie in Formel I, Z im Falle der Sulfobernsteinsäurehalbester für –OM und im Falle der Sulfobernsteinsäurediester für $-[O-A]_n-O-Ar\ R^2_m$ steht, wobei M, A, Ar, $R_2$, m und n die oben angegebene Bedeutung haben und die Stellung der $SO_3M$-Gruppe innerhalb des Bernsteinsäurerestes wiederum vertauscht sein kann, zusammen mit Viskositätsreglern. Diese Tensidkonzentrate sind dadurch gekennzeichnet, daß sie als Viskositätsregler 0.1 bis 20 Gew.-%, bezogen auf wäßriges Tensidkonzentrat, von geradkettigen oder verzweigten Glykolen mit maximal 2 bis 5 Kohlenstoffatomen abgeleitete Polyalkylenglykole eines Molekulargewichts von mindestens 1500 und/oder wasserlösliche Salze von Mono- und/oder Disulfosuccinaten von geradkettigen oder verzweigten Glykolen mit maximal 2 bis 5 Kohlenstoffatomen abgeleiteten Polyalkylenglykolen eines Molekulargewichts von mindestens 1500 enthalten.

Gegenstand der Erfindung ist weiterhin ein Verfahren zur Verbesserung des Fließverhaltens schwer beweglicher Tensidkonzentrate, enthaltend wenigstens etwa 20 Gew.-% an wasserlöslichen Salzen von Alkylpolyglykolethersulfosuccinaten der Formel I,

$$R^1-O-[A-O]_n-CO-CH_2-\underset{\displaystyle SO_3M}{\underset{|}{C}H}-CO-Z \qquad (I)$$

in der $R^1$ den Kohlenwasserstoffrest eines geradkettigen oder verzweigten, gesättigten oder ungesättigten nicht-aromatischen Alkohols mit 4 bis 24, vorzugsweise 10 bis 18, Kohlenstoffatomen, A einen Ethylen- oder 1,2-Propylenrest, n eine Zahl von 1 bis 100, M ein Kation eines wasserlöslichen Salzes, insbesondere ein Alkalimetall-, Erdalkalimetall-, Ammoniumkation oder ein aus einem organischen Amin gebildetes Kation, vorzugsweise ein Natriumkation, bedeuten und Z im Falle der Sulfobernsteinsäurehalbester für –OM steht, wobei M die oben angegebene Bedeutung hat, oder im Falle der Sulfobernsteinsäurediester für $-[O-A]_n-O-R^1$, wobei A, $R^1$ und n die oben angegebene Bedeutung haben, und in der ferner die Stellung der $SO_3M$-Gruppe innerhalb des Bersteinsäurerestes vertauscht sein kann, und/oder Alkylarylpolyglykolethersulfosuccinate der Formel II,

$$R^2_mAr-O-[A-O]_n-CO-CH_2\underset{\displaystyle SO_3M}{\underset{|}{C}H}-CO-Z \qquad (II)$$

in der $R^2$ einen geradkettigen oder verzweigten, gesättigten oder ungesättigten aliphatischen Kohlenwasserstoffrest mit 4 bis 16, insbesondere 6 bis 14, vorzugsweise 8 bis 12, Kohlenstoffatomen, m ganze Zahlen von 1 bis 3, vorzugsweise 1, Ar einen Phenylen- oder Naphthylenrest darstellen, die Symbole A, M und n dieselbe Bedeutung haben wie in Formel I, Z im Falle der Sulfobernsteinsäurehalbester für –OM und im Falle der Sulfobernsteinsäurediester für $-[O-A]_n-O-Ar\ R^2{}_m$ steht, wobei M, A, Ar, $R_2$, m und n die oben angegebene Bedeutung haben und die Stellung der $-SO_3M$-Gruppe innerhalb des Bersteinsäurerestes wiederum vertauscht sein kann, durch Zusatz geringer Mengen von Viskositätsreglern. Dieses Verfahren ist dadurch gekennzeichnet, daß man als Viskositätsregler 0.2 bis 20 Gew.-%, bezogen auf wäßriges Tensidkonzentrat, von geradkettigen oder verzweigten Glykolen mit maximal 2 bis 5 Kohlenstoffatomen abgeleitete Polyalkylenglykole eines Molekulargewichts von mindestens 1500 und/oder wasserlösliche Salze von Mono- und/oder Disulfosuccinaten von geradkettigen oder verzweigten Glykolen mit maximal 2 bis 5 Kohlenstoffatomen abgeleiteten Polyalkylenglykolen eines Molekulargewichts von mindestens 1500 zusetzt.

Die Tenside liegen vorzugsweise in Mengen von wenigstens etwa 25 Gew.-%, insbesondere etwa 30 Gew.-%, beispielsweise in Mengen von 40 bis 80 Gew.-%, bezogen auf wäßriges Tensidkonzentrat, vor.

Die hier als Viskositätsregler in Betracht kommenden niederen Polyalkylenetherglykole leiten sich von geradkettigen oder verzweigten Glykolen mit maximal 2 bis 5 Kohlenstoffatomen ab. Besondere Bedeutung besitzen die entsprechenden Polyethylenetherglykole und/oder Polypropylenetherglykole, wobei im Fall der zuletzt genannten Verbindungen die sich vom 1,2-Propylenglykol, ableitenden Polyetherglykole besondere Bedeutung besitzen. Diese Angaben sind auch gültig für die erfindungsgemäß als Viskositätsregler eingesetzten wasserlöslichen Salze der Mono- und/oder Disulfosuccinate der niederen Polyalkylenetherglykole.

Bei der Verwendung von freien Polyalkylenetherglykolen, insbesondere von freien Polyethylenglykolen und Polypropylenglykolen, als viskositätsregelnde Komponenten hat sich gezeigt, daß die Wirkung dieser Substanzen umso ausgeprägter in Erscheinung tritt, je höher das Molekulargewicht der Polyalkylenetherglykole ist. Die einzusetzenden freien Polyalkylenetherglykole sollten ein Molekulargewicht von mindestens 1500 aufweisen; vorzugsweise beträgt ihr Molekulargewicht mindestens 2000 und liegt beispielsweise im Bereich von 2000 bis 6000, insbesondere im Bereich von 3000 bis 5000.

Als besonders wirkungsvolle Viskositätsregler auch für hochkonzentrierte wäßrige Tensidkonzentrate der hier in Betracht gezogenen Art haben sich die Sulfosuccinate und hier vor allem die Disulfosuccinate von niederen Polyalkylenetherglykolen, insbesondere solche des Polyethylenglykols und/oder des 1,2-Polypropylenglykols erwiesen. Auch hier nimmt die viskositätssenkende und den Dickungszustand des Gels mindernde Wirkung der Reglersubstanzen mit steigendem Molekulargewicht und steigendem Polykondensationsgrad des Alkylenglykolbasismaterials zu. Das Molekulargewicht des Basismaterials für die Sulfosuccinate beträgt vorzugsweise mindestens 1500. Dabei kommen Molekulargewichte bis zu 6000 oder auch darüber in Betracht. Besonders bevorzugt sind Sulfosuccinate von Polyalkylenetherglykolen der angegebenen Art mit Molekulargewichten im Bereich von 1500 bis 4000.

Für die Verwendung als Viskositätsregler kommen beliebige Salze der erfindungsgemäß einzusetzenden Sulfosuccinate in Betracht. Für die

praktische Anwendung kommen insbesondere Alkalimetallsalze, lösliche Erdalkalimetallsalze, beispielsweise Magnesiumsalze, Ammoniumsalze und/oder Salze von organischen Aminen, beispielsweise Alkylolaminsalze, in Betracht. Besondere Bedeutung kommt den Natriumsalzen zu. Die für die praktische Anwendung wichtigsten Salze sind die Natriumsalze von Disulfosuccinaten von Polyethylenetherglykolen und/oder Poly-1,2-propylenetherglykolen, jeweils mit den angegebenen Mindestmolekulargewichten. Die hier zu den salzbildenden Kationen der als Viskositätsregler eingesetzten Sulfosuccinate gemachten Aussagen können auch Gültigkeit für die in den Tensiden vorliegenden salzbildenden Kationen haben. Die Viskositätsregler sollten in den wäßrigen Tensidkonzentraten in Mengen von 0.1 bis 20 Gew.-%, vorzugsweise in Mengen von 2 bis 10 Gew.-% vorliegen. Besonders bevorzugt können Mengen von 2 bis 5 Gew.-% sein. Diese Zahlenangaben beziehen sich dabei jeweils auf das wäßrige Tensidkonzentrat. Im einzelnen wird die Menge des Viskositätsreglers durch die erwünschte Senkung des Gelpunktes und/oder durch die Dickungswirkung des jeweiligen Tensids bestimmt. Zum letzteren Gesichtspunkt kann die besondere Struktur des Tensids, insbesondere das Ausmaß der Polyalkoxylierung der zugrundeliegenden Alkylpolyglykolether und Alkylarylpolyglykolether, von Bedeutung sein. Sulfosuccinate auf Basis von niedrig alkoxylierten Alkoholen und Alkylphenolen lassen sich auch in hohen Konzentrationen gewöhnlich mit 2 bis 5 Gew.-% des Viskositätsreglers wirkungsvoll beeinflussen. Bei Sulfosuccinaten auf Basis von hoch polyalkoxylierten Alkoholen und Alkylphenolen, in denen der Polymerisationsgrad des Polyalkoxyrestes mehr als 10 und bis beispielsweise 100 beträgt, können etwas größere Mengen des Viskositätsreglers erforderlich sein.

Werden im Rahmen der Erfindung Mischungen von niederen Polyalkylenetherglykolen und Mono- und/oder Disulfosuccinaten niederer Polyalkylenetherglykolen als Viskositätsregler eingesetzt, so liegt das Gewichtsverhältnis der freien Polyalkylenetherglykole zu den Sulfosuccinaten in der Regel im Bereich von 0,001:1 bis 3:1, vorzugsweise im Bereich von 0,001:1 bis 1:1.

Die als Viskositätsregler eingesetzten niederen Polyalkylenetherglykole sind bekannte, größtenteils im Handel erhältliche Substanzen. Die weiterhin als Viskositätsregler in Betracht gezogenen Mono- und/oder Disulfosuccinate niederer Polyalkylenetherglykole stellen ebenfalls eine bekannte Substanzklasse dar, die nach literaturbekannten Methoden hergestellt werden kann. Ein zweckmäßiges Herstellungsverfahren für die im Sinne der Erfindung besonders bevorzugten Natriumsulfosuccinate ist im experimentellen Teil angegeben. Die nach dieser Methode erhaltenen Succinate bestehen zum größten Teil aus Disulfosuccinaten der als Ausgangsmaterial eingesetzten Polyalkylenetherglykole; daneben sind geringe Anteile von Monosulfosuccinaten und nicht umgesetzten Polyalkylenetherglykolen vorhanden.

Die erfindungsgemäß als Viskositätsregler einzusetzenden Polyalkylenetherglykole unterscheiden sich in der Regel von den Polyalkylenetherglykolen, die bei der Alkoxylierung von Alkoholen oder Phenolen – bedingt durch die Anwesenheit geringer Wassermengen – entstehen. Dasselbe gilt für die Polyalkylenetherglykole, die als Ausgangsmaterial für die Herstellung der als Viskositätsregler einzusetzenden Mono- und Disulfosuccinate verwendet werden. Durch die Lehre der Erfindung lassen sich zudem die Viskositätsregler nach Art und Menge in vorher bestimmbarer Weise einsetzen, so daß gezielte Wirkungen in Bezug auf Viskosität und Gelzustand möglich sind.

Die erfindungsgmäß einzusetzenden Viskositätsregler sind selbst wirkungsvolle oberflächenaktive Substanzen. Aus diesem Grund wird eine unerwünschte Belastung der Tensidkonzentrate mit inaktiven Komponenten vermieden. Die erfindungsgemäßen Tensidgemische sind auch in hochkonzentrierter Form als solche pumpbar; beim Verdünnen mit Wasser tritt keine Steigerung des Gelzustandes, sondern die erwünschte Verdünnungswirkung ein.

Der Viskositätsregler kann im Rahmen der Erfindung als vorgebildete Verbindung oder als vorgebildetes Verbindungsgemisch dem wäßrigen Tensidkonzentrat zugesetzt werden. Zweckmäßigerweise wird dabei der Viskositätsregler als konzentrierte wäßrige Lösung, beispielsweise mit einem Aktivsubstanzgehalt von 50 bis 90 Gew.-%, eingesetzt und mit der wäßrigen Lösung des jeweiligen Tensids vermischt.

In einer besonderen Ausführungsform der Erfindung wird der Viskositätsregler in situ hergestellt, in dem man den tensidbildenden Grundkomponenten Alkylpolyglykolether und/oder Alkylarylpolyglykolether die den Viskositätsregler bildenden Polyalkylenetherglykole im vorgesehenen Mischungsverhältnis zugibt und das erhaltene Gemisch in bekannter Weise, beispielsweise durch Umsetzung mit Maleinsäureanhydrid und Anlagerung von Alkalimetallsulfit, zu dem gewünschten Sulfosuccinatgemisch mit eingestellter Viskosität bzw. eingestelltem Gelpunkt umsetzt.

Die Herstellung der in den erfindungsgemäßen Konzentraten als Tenside enthaltenen Alkylpolyglykolether- und Alkylarylpolyglykolethersulfosuccinate ist insbesondere in Patentschriften ausführlich beschrieben. In diesem Zusammenhang wird auf US-PS 3 329 640 und DT-OS 2 513 162 verwiesen.

Neben Alkylpolyglykolether- und Alkylarylpolyglykolethersulfosuccinaten können die erfindungsgemäßen wäßrigen Tensidkonzentrate auch andere oberflächenaktive Mittel enthalten. Geeignet sind beispielsweise nichtionische oberflächenaktive Substanzen, beispielsweise Alkylphenolpolyglykolether.

Aus der Herstellung der Alkylpolyglykolether- und Alkylarylpolyglykolethersulfosuccinate und der erfindungsgemäß einzusetzenden Viskositätsregler liegen üblicherweise geringe Mengen an anorganischen Salzen wie Natriumchlorid und/oder Natriumsulfat in den wäßrigen Konzentraten

der Erfindung vor (siehe hierzu auch die einschlägigen Angaben des Standes der Technik).

Beispiele

Die in den Beispielen 1 bis 6 verwendeten Alkylpolyglykolethersulfosuccinate, Alkylarylpolyglykolethersulfosuccinate und Polyalkylenetherglykolsulfosuccinate wurden in der nachstehend beschriebenen Weise hergestellt. Die jeweils erhaltenen Produkte werden in einer vereinfachten Schreibweise als Sulfosuccinate der als Ausgangsmaterial verwendeten Polyglykolether bezeichnet (EO = Mol Ethylenoxid).

A. Dinatrium-(Octylphenol + 11 EO)-sulfosuccinat

Als Ausgangsmaterial diente ein Anlagerungsprodukt von 11 Mol Ethylenoxid an 1 Mol Octylphenol mit den Kennzahlen: Trübungspunkt 12,2 °C; Hydroxylzahl 85,6; 100 Gewichtsprozent Aktivsubstanz; Molekulargewicht 655.

In einem Reaktionsgefäß mit Rührer, Rückflußkühler, Tropftrichter, Thermometer und Gaseinleitungsrohr wurden 225 g (0,34 Mol) des oben beschriebenen Ethylenoxidanlagerungsproduktes und 34 g (0,034 Mol) Maleinsäureanhydrid vorgelegt und das Reaktionsgefäß mit Stickstoff gespült. Das Reaktionsgemisch wurde auf 98 bis 100 °C erhitzt und 1 Stunde lang auf dieser Temperatur gehalten. Danach wurde das Gemisch auf 75 °C abgekühlt. Nach Zugabe einer Lösung von 46 g (0,36 Mol) Natriumsulfit in 695 g Wasser wurde das Gemisch auf einer Temperatur von 75 bis 80 °C gehalten, bis die Sulfitanlagerung nach etwa $1^1/_2$ Stunden beendet war.

Die entstandene Sulfosuccinatlösung hatte folgende Kennzahlen:

| | |
|---|---|
| Trockenrückstand: | 30,5 ± 0,5 Gewichtsprozent |
| Anorganische Salze: | maximal 1 Gewichtsprozent |
| Säurezahl: | < 6 |
| Gelpunkt: | 38 °C |
| Viskosität bei 25 °C: | nicht meßbar |

B. Dinatrium-($C_{12}$–$C_{14}$-Fettalkohol + 15 EO)-sulfosuccinat

Als Ausgangsmaterial diente ein Anlagerungsprodukt von 15 Mol Ethylenoxid an 1 Mol $C_{12}$–$C_{14}$-Fettalkohol (0–2 Gewichtsprozent $C_{10}$; 70 bis 75 Gewichtsprozent $C_{12}$; 25–30 Gewichtsprozent $C_{14}$; 0–2 Gewichtsprozent $C_{16}$) mit den Kennzahlen: Erstarrungspunkt 31,3 °C; Hydroxylzahl 65,4; 100 Gewichtsprozent Aktivsubstanz; durchschnittliches Molekulargewicht 858.

Wie unter A beschrieben wurden 195 g (0,23 Mol) Ethylenoxidanlagerungsprodukt und 23 g (0,23 Mol) Maleinsäureanhydrid zum Maleinsäurehalbester umgesetzt, aus dem dann durch Einwirkung von 32 g (0,25 Mol) Natriumsulfit, gelöst in 746 g Wasser, die entsprechende Sulfosuccinatlösung mit folgenden Kennzahlen erhalten wurde:

| | |
|---|---|
| Trockenrückstand: | 25 ± 0,5 Gewichtsprozent |
| Anorganische Salze: | maximal 1 Gewichtsprozent |
| Säurezahl: | < 6 |
| Gelpunkt: | 41 °C |
| Viskosität bei 25 °C: | nicht meßbar |

C. Dinatrium-(Oleyl-Cetylalkohol + 10 EO)-sulfosuccinat

Als Ausgangsmaterial wurde ein Anlagerungsprodukt von 10 Mol Ethylenoxid an 1 Mol eines technischen Oleyl-Cetylalkohols (0–2 Gewichtsprozent $C_{12}$;

2–7 Gewichtsprozent $C_{14}$; 25–35 Gewichtsprozent $C_{16}$; 55–75 Gewichtsprozent $C_{18}$; 0–2 Gewichtsprozent $C_{20}$; Jodzahl 50–55) mit folgenden Kennzahlen verwendet: Trübungsbereich 26–31 °C; Hydroxylzahl 80; 100 Gewichtsprozent Aktivsubstanz; durchschnittliches Molekulargewicht 701.

Wie unter A beschrieben wurden 228 g (0,33 Mol) Ethylenoxidanlagerungsprodukt und 32 g (0,33 Mol) Maleinsäureanhydrid zum Maleinsäurehalbester umgesetzt. Durch Einwirkung von 44 g (0,35 Mol) Natriumsulfit, gelöst in 696 g Wasser wurde eine Sulfosuccinatlösung mit den folgenden Kennzahlen erhalten:

| | |
|---|---|
| Trockenrückstand: | 30,5 ± 0,5 Gewichtsprozent |
| Anorganische Salze: | maximal 1 Gewichtsprozent |
| Säurezahl: | < 6 |
| Gelpunkt: | 57 °C |
| Viskosität bei 25 °C: | nicht meßbar |

D. Dinatrium-(Oleylalkohol + 30 EO)-sulfosuccinat

Als Ausgangsmaterial diente ein Anlagerungsprodukt von 30 Mol Ethylenoxid an 1 Mol eines technischen Oleylalkohols (2–8 Gewichtsprozent $C_{16}$; 90–97 Gewichtsprozent $C_{18}$; 0–2 Gewichtsprozent $C_{20}$; Jodzahl 92–96). Das Anlagerungsprodukt hatte folgende Kennzahlen: Schmelzpunkt 46–49 °C; Hydroxylzahl 25; 100 Gewichtsprozent Aktivsubstanz; durchschnittliches Molekulargewicht 2244.

Wie unter A beschrieben wurden 273 g (0,12 Mol) Ethylenoxidanlagerungsprodukt und 12 g (0,12 Mol) Maleinsäureanhydrid zum entsprechenden Halbester umgesetzt. Durch Einwirkung von 17 g (0,13 Mol) Natriumsulfit, gelöst in 698 g Wasser wurde eine Sulfosuccinatlösung mit folgenden Kennzahlen erhalten:

| | |
|---|---|
| Trockenrücktstand: | 30,5 ± 0,5 Gewichtsprozent |
| Anorganische Salze: | maximal 1 Gewichtsprozent |
| Säurezahl: | < 6 |
| Gelpunkt: | 52 °C |
| Viskosität bei 25 °C: | nicht meßbar |

E. Tetranatrium-(Polyethylenglykol 1550)-disulfosuccinat

Als Ausgangsmaterial diente ein handelsübliches Polyethylenglykol mit einem mittleren Molekulargewicht von 1550.

Wie unter A beschrieben wurden 388 g (0,25 Mol) Polyethylenglykol und 49 g (0,50 Mol) Maleinsäureanhydrid zum entsprechenden Polyethylenglykoldimaleinsäurehalbester umgesetzt. Durch Reaktion von 66,5 g (0,53 Mol) Natriumsulfit, gelöst

in 494 g Wasser, wurde eine Sulfosuccinatlösung mit folgenden Kennzahlen erhalten:
Trockenrückstand: 50,5±0,5 Gewichtsprozent
Anorganische Salze: maximal 2 Gewichtsprozent
Säurezahl: <10

F. Tetranatrium-(Polyethylenglykol 3000)-disulfosuccinat

Als Ausgangsmaterial wurde ein handelsübliches Polyethylenglykol mit einem mittleren Molekulargewicht von 3000 verwendet.

Wie unter A beschrieben wurden 435 g (0,145 Mol) Polyethylenglykol und 28,5 g (0,29 Mol) Maleinsäureanhydrid zum entsprechenden Polyethylenglykoldimaleinsäurehalbester umgesetzt. Durch Einwirkung von 40 g (0,32 Mol) Natriumsulfit, gelöst in 496 g Wasser, wurde eine Sulfosuccinatlösung mit folgenden Kennzahlen erhalten:
Trockenrückstand: 50,5±0,5 Gewichtsprozent
Anorganische Salze: maximal 2 Gewichtsprozent
Säurezahl: <10

G. Tetranatrium-(Polyethylenglykol 4000)-disulfosuccinat

Als Ausgangsmaterial wurde ein handelsübliches Polyethylenglykol mit einem mittleren Molekulargewicht von 4000 verwendet.

Wie unter A beschrieben wurden 450 g (0,113 Mol) Polyethylenglykol und 22,2 g (0,226 Mol) Maleinsäureanhydrid zum entsprechenden Polyethylenglykoldimaleinsäurehalbester umgesetzt. Durch Einwirkung von 32 g (0,25 Mol) Natriumsulfit, gelöst in 494 g Wasser wurde eine Sulfosuccinatlösung mit folgenden Kennzahlen erhalten:
Trockenrückstand: 50,5±0,5 Gewichtsprozent
Anorganische Salze: maximal 2 Gewichtsprozent
Säurezahl: <10

Bei den unter E, F und G beschriebenen Produkten kann nicht ausgeschlossen werden, daß sie eine geringe Menge Dinatrium (Polyethylenglykol)-monosulfosuccinat enthalten.

Beispiel 1

Die wäßrige Lösung des Dinatrium-(Octylphenol+ 11 EO)-sulfosuccinats nach A mit einem Aktivsubstanzgehalt von 31 Gewichtsprozent hatte einen Gelpunkt von 38 °C. Bei Zimmertemperatur stellte diese Lösung ein festes Gel dar. Zur Erniedrigung des Gelpunktes wurden Proben dieser Lösung mit unterschiedlichen Mengen

a) Polyethylenglykol vom mittleren Molekulargewicht 1550, 100 Gewichtsprozent (PEG 1550),
b) Polyethylenglykol vom mittleren Molekulargewicht 3000, 100 Gewichtsprozent (PEG 3000) und
c) Polyethylenglykol vom mittleren Molekulargewicht 4000, 100 Gewichtsprozent (PEG 4000)

versetzt und der sich nach dem gründlichen Vermischen jeweils einstellende Gelpunkt ermittelt. Die dabei erhaltenen Ergebnisse sind zusammen mit dem Gelpunkt des Tensidkonzentrats ohne Viskositätsregler in der nachstehenden Tabelle I wiedergegeben.

Tabelle I

| Polyethylenglykol | Zusatzmenge Gew.-% | Gelpunkt °C |
|---|---|---|
| – | – | 38 |
| PEG 1550 | 0,25 | 27 |
| " | 0,30 | 26 |
| " | 0,40 | 25 |
| " | 0,50 | 17 |
| " | 0,60 | 7 |
| " | 1,0 | < 0 |
| PEG 3000 | 0,25 | 26 |
| " | 0,30 | 24 |
| " | 0,40 | 16,5 |
| " | 0,54 | 8 |
| " | 0,65 | < 0 |
| " | 1,00 | < 0 |
| PEG 4000 | 0,26 | 25 |
| " | 0,35 | 22 |
| " | 0,45 | 14 |
| " | 0,56 | 8 |
| " | 0,67 | < 0 |
| " | 1,0 | < 0 |

Beispiel 2

Die im Beispiel 1 beschriebene wäßrige Lösung des Dinatrium-(Octylphenol+ 11 EO)-sulfosuccinates wurde zur Gelpunkterniedrigung mit wechselnden Mengen Polyethylenglykolethersulfosuccinaten versetzt und der sich nach dem gründlichen Vermischen jeweils einstellende Gelpunkt festgestellt. Als Viskositätsregler wurden die unter E, F und G beschriebenen Substanzen

d) Tetranatrium-(Polyethylenglykol 1550)-disulfosuccinat (PEG 1550-S-succinat),

e) Tetranatrium-(Polyethylenglykol 3000)-disulfosuccinat (PEG 3000-S-succinat) und

f) Tetranatrium-(Polyethylenglykol 4000)-disulfosuccinat (PEG 4000-S-succinat)

in Form ihrer 50 gewichtsprozentigen Lösungen eingesetzt.

Die gefundenen Ergebnisse sind in der nachstehenden Tabelle II wiedergegeben. In Spalte 3 sind jeweils die Mengen wasserfreier Aktivsubstanz angegeben.

Tabelle II

| Disulfosuccinat | Zusatzmenge Gew.-% | Gelpunkt °C |
|---|---|---|
| – | – | 38 |
| PEG 1550-S-succinat | 0,30 | 19 |
| " | 0,40 | 14 |
| " | 0,50 | 8 |
| " | 0,63 | < 0 |
| " | 0,75 | < 0 |
| " | 0,80 | < 0 |
| PEG 3000-S-succinat | 0,30 | 18 |
| " | 0,40 | 12,5 |
| " | 0,50 | 6 |
| " | 0,63 | < 0 |
| " | 0,75 | < 0 |
| " | 1,30 | < 0 |
| PEG 4000-S-succinat | 0,30 | 17 |
| " | 0,40 | 11 |
| " | 0,50 | 5 |
| " | 0,63 | < 0 |
| " | 0,75 | < 0 |
| " | 1,3 | < 0 |

Beispiel 3

Die wäßrige Lösung des Dinatrium-($C_{12}/C_{14}$-Fettalkohol + 15 EO)-sulfosuccinates nach B mit einem Aktivsubstanzgehalt von 25 Gewichtsprozent hatte einen Gelpunkt von 41 °C. Bei Zimmertemperatur stellte diese Lösung ein festes Gel dar. Zur Erniedrigung des Gelpunktes wurden Proben dieser Lösung mit unterschiedlichen Mengen der unter a) bis c) in Beispiel 1 beschriebenen Substanzen versetzt und der sich nach dem gründlichen Vermischen jeweils einstellende Gelpunkt ermittelt. Die dabei gefundenen Ergebnisse sind zusammen mit dem Gelpunkt des Tensidkonzentrats ohne Viskositätsreglerzusatz (Blindprobe) in der nachstehenden Tabelle III wiedergegeben.

Tabelle III

| Polyethylenglykol | Zusatzmenge Gew.-% | Gelpunkt °C |
|---|---|---|
| – | – | 41 |
| PEG 1550 | 0,20 | 37 |
| " | 0,40 | 33 |
| " | 0,60 | 29 |
| " | 0,80 | 25 |
| " | 1,00 | 19 |
| PEG 3000 | 0,22 | 35 |
| " | 0,44 | 30 |
| " | 0,65 | 25 |
| " | 0,86 | 20 |
| " | 1,10 | 11 |
| PEG 4000 | 0,23 | 34 |
| " | 0,45 | 27 |
| " | 0,68 | 23 |
| " | 0,90 | 6 |
| " | 1,2 | 3 |

Beispiel 4

Die in Beispiel 3 beschriebene wäßrige Lösung des Dinatrium-($C_{12}/C_{14}$-Fettalkohol + 15 EO)-sulfosuccinates wurde zur Gelpunktserniedrigung mit wechselnden Mengen Polyethylenglykolethersulfosuccinaten versetzt. Nach gründlichem Vermischen wurde der jeweils sich einstellende Gelpunkt festgestellt. Als Viskositätsregler wurden die in Beispiel 2 unter d) bis f) beschriebenen Polyethylenglykoletherdisulfosuccinate in Form von 50 gewichtsprozentigen wäßrigen Lösungen eingesetzt.

Die Ergebnisse dieser Versuchsreihe sind in der nachstehenden Tabelle 4 zusammengefaßt. In Spalte 2 sind jeweils die Mengen wasserfreier Aktivsubstanz angegeben.

Tabelle IV

| Disulfosuccinat | Zusatzmenge Gew.-% | Gelpunkt °C |
|---|---|---|
| – | – | 41 |
| PEG 1550-S-succinat | 0,25 | 32 |
| " | 0,50 | 24 |
| " | 0,75 | 16 |
| " | 1,00 | 10 |
| " | 1,30 | 1 |
| PEG 3000-S-succinat | 0,25 | 28 |
| " | 0,50 | 20 |
| " | 0,75 | 13 |
| " | 1,00 | 7 |
| " | 1,30 | < 0 |
| PEG 4000-S-succinat | 0,25 | 29 |
| " | 0,50 | 20 |
| " | 0,75 | 11 |
| " | 1,00 | 3 |
| " | 1,30 | < 0 |

Beispiel 5

Die wäßrige Lösung des Dinatrium-(Oleyl-/Cetylalkohol + 10 EO)-sulfosuccinates nach C mit einem Aktivsubstanzgehalt von 30 Gewichtsprozent hatte einen Gelpunkt von 57 °C. Bei Zimmertemperatur stellte diese Lösung ein festes Gel dar. Zur Gelpunktserniedrigung wurden Proben dieser Lösung mit unterschiedlichen Mengen der unter d) bis f) in Beispiel 2 beschriebenen Polyethylenglykolethersulfosuccinate in Form von 50 gewichtsprozentigen wäßrigen Lösungen versetzt und der jeweils sich einstellende Gelpunkt ermittelt.

Die gefundenen Ergebnisse sind in der nachfolgenden Tabelle V zusammengefaßt. In Spalte 2 sind die jeweiligen Mengen an wasserfreier Aktivsubstanz wiedergegeben.

Tabelle V

| Disulfosuccinat | Zusatzmenge Gew,-% | Gelpunkt °C |
|---|---|---|
| – | – | 57 |
| PEG 1550-S-succinat | 1,0 | 32 |
| " | 1,5 | 11 |
| " | 2,0 | 0 |
| PEG 3000-S-succinat | 1,0 | 30,5 |
| " | 1,3 | 2 |
| " | 1,5 | < 0 |
| " | 2,0 | < 0 |
| PEG 4000-S-succinat | 1,0 | 31 |
| " | 1,3 | 3 |
| " | 1,5 | < 0 |
| " | 2,0 | < 0 |

Beispiel 6

Die wäßrige Lösung des Dinatrium-(Oleylalkohol + 30 EO)-sulfosuccinats nach D mit einem Aktivsubstanzgehalt von 30 Gewichtsprozent hatte einen Gelpunkt von 52 °C. Bei Zimmertemperatur stellte dieses Tensidkonzentrat ein festes unbewegliches Gel dar. Zur Gelpunktserniedrigung wurden dieser Lösung wechselnde Mengen der unter d) bis f) in Beispiel 2 beschriebenen Substanzen in Form von 50 gewichtsprozentigen wäßrigen Lösungen zugemischt. Die jeweils sich einstellenden Gelpunkte sind in der Tabelle VI wiedergegeben. In Spalte 2 der Tabelle VI sind die jeweiligen Mengen an wasserfreier Aktivsubstanz angeführt.

Tabelle VI

| Disulfosuccinat | Zusatzmenge Gew.-% | Gelpunkt °C |
|---|---|---|
| – | – | 52 |
| PEG 1550-S-succinat | 2 | 32 |
| " | 2,5 | 20 |
| " | 4 | 3 |
| PEG 3000-S-succinat | 2 | 28,5 |
| " | 2,5 | 18 |
| " | 4 | 0 |
| PEG 4000-S-succinat | 2 | 23 |
| " | 2,5 | 14 |
| " | 4 | < 0 |

Beispiel 7

Die wäßrige Lösung des Dinatrium-(Octylphenol + 11 EO)-sulfosuccinats nach A mit einem Aktivsubstanzgehalt von 31 Gewichtsprozent wurde zur Gelpunkterniedrigung mit wechselnden Mengen der Mischungen

a) Polyethylenglykol von mittlerem Molekulargewicht 4000, 50prozentig in Wasser (PEG 4000) und Tetranatrium-Polyethylenglykol 4000-disulfosuccinat, 50prozentig in Wasser (PEG-4000-S-succinat)
Mischverhältnis
PEG 4000 : PEG-4000-S-succinat = 1:1
Feststoffgehalt der Mischung = 50±0,5%
anorganische Salze = max. 1,0%
Säurezahl = <5

b) Mischung der in a) genannten Komponenten
Mischungsverhältnis
PEG 4000 : PEG-4000-S-succinat = 3:1
Feststoffgehalt der Mischung = 50±0,5%
anorganische Salze = max. 0,5%
Säurezahl = <2,5

c) Mischung der in a) genannten Komponenten
Mischungsverhältnis
PEG 4000 : PEG-4000-S-succinat = 1:3
Feststoffgehalt der Mischung = 50±0,5%
anorganische Salze = max. 1,5%
Säurezahl = <7,5

versetzt und der sich nach dem üblichen Vermischen einstellende Gelpunkt ermittelt. Die dabei erhaltenen Ergebnisse sind zusammen mit dem Gelpunkt des Tensidkonzentrats ohne Viskositätsregler in der nachstehenden Tabelle VII wiedergegeben.

Tabelle VII

| PEG 4000 + PEG-4000-S-succinat | Zusatzmenge Gew.-% | Gelpunkt °C |
|---|---|---|
| – | – | 38 |
| Mischungsverhältnis 1:1 | 0,6 | 21 |
| nach a) | 0,8 | 15 |
| Beispiel 7 | 1,0 | 9 |
| | 1,26 | 3 |
| | 1,5 | < 0 |
| Mischungsverhältnis 3:1 | 0,6 | 23 |
| nach b) | 0,8 | 19 |
| Beispiel 7 | 1,0 | 12 |
| | 1,26 | 7 |
| | 1,5 | < 0 |
| Mischungsverhältnis 3:1 | 0,6 | 18 |
| nach c) | 0,8 | 13 |
| Beispiel 7 | 1,0 | 7 |
| | 1,26 | 1 |
| | 1,5 | < 0 |

**Patentansprüche**

1. Wäßrige Tensidkonzentrate, enthaltend wenigstens etwa 20 Gew.-% an wasserlöslichen Salzen von Alkylpolyglykolethersulfosuccinaten der Formel I,

$$R^1\text{–O–}[A\text{–}O]_n\text{–CO–}CH_2\text{–}\underset{SO_3M}{\underset{|}{C}}H\text{–CO–Z} \qquad (I)$$

in der $R^1$ den Kohlenwasserstoffrest eines geradkettigen oder verzweigten, gesättigten oder ungesättigten nicht-aromatischen Alkohols mit 4 bis 24, vorzugsweise 10 bis 18, Kohlenstoffatomen, A einen Ethylen- oder 1,2-Propylenrest, n eine Zahl von 1 bis 100, M ein Kation eines wasserlöslichen Salzes, insbesondere ein Alkalimetall-, Erdalkalimetall-, Ammoniumkation oder ein aus einem organischen Amin gebildetes Kation, vorzugsweise ein Natriumkation, bedeuten und Z im Falle der Sulfobernsteinsäurehalbester für –OM steht, wobei M die oben angegebene Bedeutung hat, oder im Falle der Sulfobernsteinsäurediester $-[O-A]_n-O-R^1$, wobei A, $R^1$ und n die obenangegebene Bedeutung haben, und in der ferner die Stellung der $SO_3M$-Gruppe innerhalb des Bernsteinsäurerestes vertauscht sein kann, und/oder Alkylarylpolyglykolethersulfosuccinate der Formel II,

$$R^2_mAr\text{–O–}[A\text{–}O]_n\text{–CO–}CH_2\underset{SO_3M}{\underset{|}{C}}H\text{–CO–Z} \qquad (II)$$

in der $R^2$ einen geradkettigen oder verzweigten, gesättigten oder ungesättigten aliphatischen Kohlenwasserstoffrest mit 4 bis 16, insbesondere 6 bis 14, vorzugsweise 8 bis 12, Kohlenstoffatomen, m ganze Zahlen von 1 bis 3, vorzugsweise 1, Ar einen Phenylen- oder Naphthylenrest darstellen, die Symbole A, M und n dieselbe Bedeutung haben wie in Formel I, Z im Falle der Sulfobernsteinsäurehalbester für –OM und im Falle der Sulfobernsteinsäurediester für $-[O-A]_n-O-R^2_m$ steht, wobei M, A, Ar, $R_2$, m und n die oben angegebene Bedeutung haben und die Stellung der $SO_3M$-Gruppe innerhalb des Bersteinsäurerestes wiederum vertauscht sein kann, zusammen mit Viskositätsreglern, dadurch gekennzeichnet, daß sie als Viskositätsreglern 0.1 bis 20 Gew.-%, bezogen auf wäßriges Tensidkonzentrat, von geradkettigen oder verzweigten Glykolen mit maximal 2 bis 5 Kohlenstoffatomen abgeleitete Polyalkylenglykole eines Molekulargewichts von mindestens 1500 und/oder wasserlösliche Salze von Mono- und/ oder Disulfosuccinaten von geradkettigen oder verzweigten Glykolen mit maximal 2 bis 5 Kohlenstoffatomen abgeleiteten Polyalkylenglykolen eines Molekulargewichts von mindestens 1500 enthalten.

2. Wäßrige Tensidkonzentrate nach Anspruch 1, dadurch gekennzeichnet, daß sie als Viskositätsregler Polyethylenetherglykole und/oder Polypropylenetherglykole und/oder wasserlösliche Salze von Mono- und/oder Disulfosuccinaten von Polyethylenetherglykolen und/oder Polypropylenetherglykolen enthalten.

3. Wäßrige Tensidkonzentrate nach den Ansprüche 1 und 2, dadurch gekennzeichnet, daß das Molekulargewicht der den salzförmigen Viskositätsreglern zugrundeliegenden Polyalkylenetherglykole im Bereich bis zu etwa 6000 liegt.

4. Wäßrige Tensidkonzentrate nach den Ansprüchen 1 bis 3, dadurch gekennzeichnet, daß die Viskositätsregler und/oder die im Konzentrat vorliegenden Tensidsalze als Kation Alkalimetall-, wasserlösliche Erdalkalimetall-, Ammonium- und/oder Aminkationen aufweisen.

5. Wäßrige Tensidkonzentrate nach den Ansprüchen 1 bis 4, dadurch gekennzeichnet, daß die Viskositätsregler in Mengen von 2 bis 10 Gew.-%, vorzugsweise 2 bis 5 Gew.-%, bezogen auf wäßriges Tensidkonzentrat, vorliegen.

6. Wäßrige Tensidkonzentrate nach den Ansprüchen 1 bis 5, dadurch gekennzeichnet, daß sie die Tensidsalze in Mengen von wenigstens etwa 25 Gew.-%, z.B. in Mengen von 40 bis 80 Gew.-%, bezogen auf wäßriges Tensidkonzentrat, enthalten.

7. Wäßrige Tensidkonzentrate nach den Ansprüchen 1 bis 6, dadurch gekennzeichnet, daß sie zusätzliche oberflächenaktive Verbindungen enthalten.

8. Verfahren zur Verbesserung des Fließverhaltens schwer beweglicher Tensidkonzentrate, enthaltend wenigstens etwa 20 Gew.-% an wasserlöslichen Salzen von Alkylpolyglykolethersulfosuccinaten der Formel I,

$$R^1\text{–O–}[A\text{–}O]_n\text{–CO–}CH_2\text{–}\underset{SO_3M}{\underset{|}{C}}H\text{–CO–Z} \qquad (I)$$

in der $R^1$ den Kohlenwasserstoffrest eines geradkettigen oder verzweigten, gesättigten oder ungesättigten nicht-aromatischen Alkohols mit 4 bis 24, vorzugsweise 10 bis 18, Kohlenstoffatomen, A einen Ethylen- oder 1,2-Propylenrest, n eine Zahl von 1 bis 100, M ein Kation eines wasserlöslichen Salzes, insbesondere ein Alkalimetall-, Erdalkalimetall-, Ammoniumkation oder ein aus einem organischen Amin gebildetes Kation, vorzugsweise ein Natriumkation, bedeuten und Z im Falle der Sulfobernsteinsäurehalbester für –OM steht, wobei M die oben angegebene Bedeutung hat, oder im Falle der Sulfobernsteinsäurediester für $-[O-A]_n-O-R^1$, wobei A, $R^1$ und n die oben angegebene Bedeutung haben, und in der ferner die Stellung der $SO_3M$-Gruppe innerhalb des Bernsteinsäurerestes vertauscht sein kann, und/oder Alkylarylpolyglykolethersulfosuccinate der Formel II,

$$R^2_mAr-O-[A-O]_n-CO-CH_2\underset{\displaystyle SO_3M}{\underset{|}{C}}H-CO-Z \quad (II)$$

in der $R^2$ einen geradkettigen oder verzweigten, gesättigten oder ungesättigten aliphatischen Kohlenwasserstoffrest mit 4 bis 16, insbesondere 6 bis 14, vorzugsweise 8 bis 12, Kohlenstoffatomen, m ganze Zahlen von 1 bis 3, vorzugsweise 1, Ar einen Phenylen- oder Naphthylenrest darstellen, die Symbole A, M und n dieselbe Bedeutung haben wie in Formel I, Z im Falle der Sulfobernsteinsäurehalbester für –OM und im Falle der Sulfobernsteinsäurediester für $-[O-A]_n-O-Ar-R^2_m$ steht, wobei M, A, Ar, $R_2$, m und n die oben angegebene Bedeutung haben und die Stellung der $-SO_3M$-Gruppe innerhalb des Bernsteinsäurerestes wiederum vertauscht sein kann, durch Zusatz geringer Mengen von Viskositätsreglern, dadurch gekennzeichnet, daß man als Viskositätsregler 0.1 bis 20 Gew.-%, bezogen auf wäßriges Tensidkonzentrat, von geradkettigen oder verzweigten Glykolen mit maximal 2 bis 5 Kohlenstoffatomen abgeleitete Polyalkylenglykole eines Molekulargewichts von mindestens 1500 und/oder wasserlösliche Salze von Mono- und/oder Disulfosuccinaten von geradkettigen oder verzweigten Glykolen mit maximal 2 bis 5 Kohlenstoffatomen abgeleiteten Polyalkylenglykolen eines Molekulargewichts von mindestens 1500 zusetzt.

**Claims**

1. Aqueous surfactant concentrates containing at least about 20% by weight water-soluble salts of alkyl polyglycol ether sulfosuccinates corresponding to formula I

$$R^1-O-[A-O]_n-CO-CH_2-\underset{\displaystyle SO_3M}{\underset{|}{C}}H-CO-Z \quad (I)$$

in which $R^1$ is the hydrocarbon radical of a linear or branched, saturated or unsaturated, non-aromatic $C_4$–$C_{24}$ and preferably $C_{10}$–$C_{18}$ alcohol, A is an ethylene or 1,2-propylene group, n is an integer of 1 to 100, M is a cation of a water-soluble salt, more especially an alkali metal, alkaline earth metal, ammonium cation or a cation formed from an organic amine, preferably a sodium cation, and Z in the case of the sulfosuccinic acid semiester stands for –OM, where M is as defined above, or in the case of the sulfosuccinic acid diester stands for $-[O-A]_n-O-R^1$, where A, $R^1$ and n are as defined above, and in which the position of the $SO_3M$ group within the succinic acid group can be interchanged: and/or alkyl aryl polyglycol ether sulfosuccinates corresponding to formula II

$$R^2_mAr-O-[A-O]_n-CO-CH_2\underset{\displaystyle SO_3M}{\underset{|}{C}}H-CO-Z \quad (II)$$

in which $R^2$ is a linear or branched, saturated or unsaturated, aliphatic $C_4$–$C_{16}$, preferably $C_6$–$C_{14}$ and more preferably $C_8$–$C_{12}$ hydrocarbon radical, m is an integer of 1 to 3, preferably 1, Ar is a phenylene or naphthylene radical, the symbols A, M and n have the same meaning as in formula I, Z in the case of the sulfosuccinic acid semiester stands for –OM and in the case of the sulfosuccinic acid diester for $-[O-A]_n-O-Ar\ R^2_m$, where M, A, Ar, $R_2$, m and n are as defined above, and the position of the $SO_3M$ group within the succinic acid radical can again be interchanged, together with viscosity regulators, characterized in that they contain as viscosity regulators, 0.1 to 20% by weight, based on aqueous surfactant concentrate, of polyalkylene glycols having a molecular weight of at least 1500 derived from linear or branched glycols containing at most 2 to 5 carbon atoms and/or water-soluble salts of mono- and/or disulfosuccinates of polyalkylene glycols having a molecular weight of at least 1500 derived from linear or branched glycols containing at most 2 to 5 carbon atoms.

2. Aqueous surfactant concentrates as claimed in claim 1, characterized in that they contain polyethylene ether glycols and/or polypropylene ether glycols and/or water-soluble salts of mono- and/or disulfosuccinates of polyethylene ether glycols and/or polypropylene ether glycols as viscosity regulators.

3. Aqueous surfactant concentrates as claimed in claims 1 and 2, characterized in that the molecular weight of the polyalkylene ether glycols on which the salt-form viscosity regulators are based is up to about 6000.

4. Aqueous surfactant concentrates as claimed in claims 1 to 3, characterized in that the viscosity regulators and/or the surfactant salts in the concentrate contain alkali metal, water-soluble alkaline earth metal, ammonium and/or amine cations as cation.

5. Aqueous surfactant concentrates as claimed in claims 1 to 4, characterized in that the viscosity regulators are used in quantities of 2 to 10% by weight and preferably in quantities of 2 to 5% by weight, based on aqueous surfactant concentrate.

6. Aqueous surfactant concentrates as claimed in claims 1 to 5, characterized in that they contain the surfactant salts in quantities of at least about 25% by weight, for example in quantities of from 40 to 80% by weight, based on the aqueous surfactant concentrate.

7. Aqueous surfactant concentrates as claimed in claims 1 to 6, characterized in that they contain additional surface-active compounds.

8. A process for improving the flow behavior of low-mobility surfactant concentrates containing at least about 20% by weight water-soluble salts of akyl polyglycol ether sulfosuccinates corresponding to formula I

$$R^1-O-[A-O]_n-CO-CH_2-\underset{\displaystyle SO_3M}{\underset{|}{C}}H-CO-Z \quad (I)$$

in which $R^1$ is the hydrocarbon radical of a linear or branched, saturated or unsaturated, non-aromatic $C_4$–$C_{24}$ and preferably $C_{10}$–$C_{18}$ alcohol, A is an ethylene or 1,2-propylene group, n is an integer of 1 to 100, M is a cation of a water-soluble salt, more especially an alkali metal, alkaline earth metal, ammonium cation or a cation formed from an organic amine, preferably a sodium cation, and Z in the case of the sulfosuccinic acid semiester stands for –OM, where M is as defined above, or in the case of the sulfosuccinic acid diester stands for $-[O–A]_n–O–R^1$, where A, $R^1$ and n are as defined above, and in which the position of the $SO_3M$ group within the succinic acid group can be interchanged: and/or alkyl aryl polyglycol ether sulfosuccinates corresponding to formula II

$$R^2_mAr–O–[A–O]_n–CO–CH_2\underset{\displaystyle SO_3M}{\underset{|}{C}}H–CO–Z \qquad (II)$$

in which $R^2$ is a linear or branched, saturated or unsaturated, aliphatic $C_4$–$C_{16}$, preferably $C_6$–$C_{14}$ and more preferably $C_8$–$C_{12}$ hydrocarbon radical, m is an integer of 1 to 3, preferably 1, Ar is a phenylene or naphthylene radical, the symbols A, M and n have the same meaning as in formula I, Z in the case of the sulfosuccinic acid semiester stands for –OM and in the case of the sulfosuccinic acid diester for $-[O–A]_n–O–Ar\ R^2{}_m$, where M, A, Ar, $R^2$, m and n are as defined above, and the position of the $SO_3M$ group within the succinic acid radical can again be interchanged, by addition of small quantities of viscosity regulators, characterized in that 0.1 to 20% by weight, based on aqueous surfactant concentrate, of polyalkylene glycols having a molecular weight of at least 1500 derived from linear or branched glycols containing at most 2 to 5 carbon atoms and/or water-soluble salts of mono- and/or disulfosuccinates of polyalkylene glycols having a molecular weight of at least 1500 derived from linear or branched glycols containing at most 2 to 5 carbon atoms are added as viscosity regulators.

**Revendications**

1. Concentrés aqueux d'agents tensio-actifs contenant au moins environ 20% en poids de sels soluble dans l'eau de sulfosuccinates d'alkylpolyglycoléthers de formule I:

$$R^1–O–[A–O]_n–CO–CH_2–\underset{\displaystyle SO_3M}{\underset{|}{C}}H–CO–Z \qquad (I)$$

dans laquelle $R^1$ représente le reste hydrocarboné d'un alcool non aromatique saturé ou non saturé, à chaîne droite ou ramifiée, ayant de 4 à 24, de préférence de 10 à 18 atomes de carbone; A représente un radical éthylène ou 1,2-propylène; n est un nombre entier valant de 1 à 100; M représente un cation d'un sel soluble dans l'eau, en particulier un cation alcalin, alcalino-terreux ou d'ammonium, ou un cation formé à partir d'une amine organique, de préférence un cation sodium; et Z représente –OM dans le cas de l'hémiester de l'acide sulfosuccinique, M ayant la signification donnée plus haut, ou $-[O–A]–O–R^1$ dans le cas du diester de l'acide sulfosuccinique, A, $R^1$ et n ayant les significations données plus haut; et dans laquelle en outre la position du groupe $SO_3M$ peut être échangée à l'intérieur du reste sulfosuccinyle; et/ou de sulfosuccinates d'alkylarylpolyglycoléthers de formule II

$$R^2_mAr–O–[A–O]_n–CO–CH_2\underset{\displaystyle SO_3M}{\underset{|}{C}}H–CO–Z \qquad (II)$$

dans laquelle $R^2$ représente un reste hydrocarboné aliphatique saturé ou non saturé, à chaîne droite ou ramifiée, ayant de 4 à 16, en particulier de 6 à 14, de préférence de 8 à 12 atomes de carbone; m est un nombre entier valant de 1 à 3, de préférence 1; Ar représente un radical phénylène ou naphthylène; les symboles A, M et n ont les mêmes significations que dans la formule I; Z représente –OM dans le cas de l'hémi-ester de l'acide sulfosuccinique, et $-[A–O]_n–O–Ar\ R^2{}_m$ dans le cas du diester de l'acide sulfosuccinique; M, A, Ar, $R^2$, m et n ayant les significations données plus haut et la position du groupe $-SO_3M$ à l'intérieur du reste sulfosuccinyle pouvant là encore être échangée, conjointement avec des régulateurs de viscosité, caractérisé en ce qu'ils contiennent, en tant que régulateurs de viscosité, de 0,1 à 20% en poids, par rapport au concentré aqueux d'agents tensio-actifs, de polyalkylèneglycols ayant un poids moléculaire d'au moins 1500, dérivés de glycols à chaîne droite ou ramifiée, ayant un maximum de 2 à 5 atomes de carbone, et/ou de sels solubles dans l'eau de mono- et/ou disulfosuccinates de polyalkylèneglycols ayant un poids moléculaire d'au moins 1500, dérivés de glycols à chaîne droite ou ramifiée ayant au maximum de 2 à 5 atomes de carbone.

2. Concentrés d'agents tensio-actifs selon la revendication 1, caractérisés en ce qu'ils contiennent, en tant que régulateurs de viscosité, des polyéthylène-étherglycols et/ou des polypropylène-étherglycols et/ou des sels solubles dans l'eau de mono- et/ou disulfosuccinates de polyéthylène-étherglycols et/ou de polypropylène-étherglycols.

3. Concentrés aqueux d'agents tensio-actifs selon les revendications 1 et 2, caractérisés en ce que le poids moléculaire des polyalkylène-étherglycols à la base des régulateurs de viscosité formant des sels va jusqu'à environ 6000.

4. Concentrés aqueux d'agents tensio-actifs selon l'une quelconque des revendications 1 à 3, caractérisés en ce que les régulateurs de viscosité et/ou les sels d'agents tensio-actifs présents dans le concentré comportent en tant que cation

des cations alcalins, alcalino-terreux solubles dans l'eau, d'ammonium et/ou d'amines.

5. Concentrés aqueux d'agents tensio-actifs selon l'une quelconque des revendications 1 à 4, caractérisés en ce que les régulateurs de viscosité sont présents en quantités de 2 à 10% en poids, de préférence de 2 à 5% en poids, par rapport au concentré aqueux d'agents tensioactifs.

6. Concentrés aqueux d'agents tensio-actifs selon l'une quelconque des revendications 1 à 6, caractérisés en ce qu'ils contiennent les sels d'agent tensio-actifs en quantités d'au moins environ 25% en poids, par exemple en quantités de 40 à 80% en poids, par rapport au concentré aqueux d'agents tensio-actifs.

7. Concentrés aqueux d'agents tensio-actifs selon l'une quelconque des revendications 1 à 6, caractérisés en ce qu'ils contiennent des composés tensio-actifs supplémentaires.

8. Procédé pour l'amélioration des propriétés d'écoulement de concentrés d'agents tensio-actifs peu mobiles, contenant au moins environ 20% en poids de sels solubles dans l'eau de sulfosuccinates d'alkylpolyglycoléthers de formule I:

$$R^1{-}O{-}[A{-}O]_n{-}CO{-}CH_2{-}\underset{\displaystyle SO_3M}{\underset{|}{C}}H{-}CO{-}Z \qquad (I)$$

dans laquelle $R^1$ représente le reste hydrocarboné d'un alcool non aromatique saturé ou non saturé, à chaîne droite ou ramifiée, ayant de 4 à 24, de préférence de 10 à 18 atomes de carbone; A représente un radical éthylène ou 1,2-propylène; M est un nombre entier valant de 1 à 100; M représente un cation d'un sel soluble dans l'eau, en particulier un cation alcalin, alcalino-terreux ou d'ammonium, ou un cation formé à partir d'une amine organique, de préférence un cation sodium; et Z représente $-OM$ dans le cas de l'hémi-ester de l'acide sulfosuccinique, M ayant la signification donnée plus haut, ou $-[A{-}O]_n{-}O{-}R^1$ dans le cas du diester de l'acide sulfosuccinique, A, $R^1$ et n ayant les significations données plus haut; et en outre dans laquelle la position du groupe $-SO_3M$ peut être échangée à l'intérieur du reste succinyle, et/ou de sulfosuccinates d'alkylarylpolyglycoléthers de formule II

$$R^2_mAr{-}O{-}[A{-}O]_n{-}CO{-}CH_2\underset{\displaystyle SO_3M}{\underset{|}{C}}H{-}CO{-}Z \qquad (II)$$

dans laquelle $R^2$ représente un reste hydrocarboné aliphatique saturé ou non saturé, à chaîne droite ou ramifiée, ayant de 4 à 16, en particulier de 6 à 14, de préférence de 8 à 12 atomes de carbone; m représente des nombres entiers valant de 1 à 3, de préférence 1; Ar représente un radical phénylène ou naphthylène; les symboles A, m et n ont les mêmes significations que dans la formule I; Z représente $-OM$ dans le cas de l'hémi-ester de l'acide sulfosuccinique et $-[A{-}O]_n{-}O{-}Ar{-}R^2{}_m$ dans le cas du diester de l'acide sulfosuccinique; M, A, Ar, $R^2$, m et n ayant les significations données plus haut, et la position du groupe $-SO_3M$ pouvant là encore être échangée à l'intérieur du radical succinyle; par addition de faibles quantités de régulateurs de viscosité, ce procédé est caractérisé en ce que l'on ajoute, en tant que régulateur de viscosité, de 0,1 à 20% en poids, par rapport au concentré aqueux d'agent tensio-actif, de polyalkylèneglycols ayant un poids moléculaire d'au moins 1500, dérivés de glycols à chaîne droite ou ramifiée ayant au maximum de 2 à 5 atomes de carbone et/ou de sels solubles dans l'eau de mono- et/ou disulfosuccinates de polyalkylèneglycols ayant un poids moléculaire d'au moins 1500, dérivés de glycols à chaîne droite ou ramifiée ayant au maximum de 2 à 5 atomes de carbone.